# EUROPÄISCHE PATENTSCHRIFT

(11) **EP 1 827 096 B1**
(45) Veröffentlichungstag und Bekanntmachung des Hinweises auf die Patenterteilung: **25.03.2009**
(21) Anmeldenummer: 05822610.1
(22) Anmeldetag: 30.11.2005
(51) Int. Cl.: A01N 25/18, A01M 13/00

(54) **VORRICHTUNG ZUR KONTROLLIERTEN ABGABE DES KUPFERSTECHERPHEROMONS**
DEVICE FOR DISPENSING BARK BEETLE PHEROMONE IN A CONTROLLED MANNER
DISPOSITIF PERMETTANT DE DEGAGER DE MANIERE COMMANDEE DES PHEROMONES DU CHALCOGRAPHE

(30) Priorität: 01.12.2004 DE 102004058052
(43) Veröffentlichungstag der Anmeldung: 05.09.2007
(73) Patentinhaber: BASF SE, 67056 Ludwigshafen (DE)
(72) Erfinder: BAIER, Ulf, 99334 Ichterhausen (DE); SCHROETER, Hansjochen, 79199 Kirchzarten (DE); ZÜHLKE, Thomas, 42653 Solingen (DE); JENTZSCH, Jürgen, 39175 Gerwisch (DE)
(74) Vertreter: Reitstötter - Kinzebach
(86) Internationale Anmeldenummer: PCT/EP2005/012786
(87) Internationale Veröffentlichungsnummer: WO 2006/058729

(56) Entgegenhaltungen:
- EP-A- 0 273 197
- EP-A- 0 413 325
- DE-U1- 9 002 948
- VAUPEL, O.: "Möglichkeiten der Verminderung von Borkenkäferschäden durch die Anwendung von Pheromonfallen" MITTEILUNGEN AUS DER BIOLOGISCHEN BUNDESANSTALT FÜR LAND- UND FORSTWIRTSCHAFT - BERLIN-DAHLEM, [Online] Bd. 267, Januar 1991 (1991-01), Seiten 80-93, XP002369580 Berlin Mitteilungen aus der Biologischen Bundesanstalt für Land- und Forstwirtschaft Berlin-Dahlem Gefunden im Internet: URL:http://www.bba.de/veroeff/mitt/mittver trieb.htm> [gefunden am 2006-02-23]
- DUBBEL,V., UND VOPEL,M O.: "Optimierung des Falleseinsatzes bei Buchdrucker und Kupferstecher" FORSTTECHNISCHE INFORMATIONEN, [Online] Bd. 8/96, 1996, Seiten 77-80, XP002369581 Kuratorium für Waldarbeit und Forsttechnik e.V (KWF) Gefunden im Internet: URL:http://www.kwf-online.de/deutsch/infor mation/fti/web_pdf/1996/960800.pdf> [gefunden am 2006-02-23]
- BAADER E J: "Pityogenes spp. (Col. Scolytidae): Untersuchungen über verhaltenssteuerende Duftstoffe und deren Anwendung im Waldschutz" JOURNAL OF APPLIED ENTOMOLOGY, Bd. 107, Nr. 1, 1989, Seiten 1-31, XP009062311 ISSN: 0931-2048

## Beschreibung

Die vorliegende Erfindung betrifft eine Vorrichtung zur kontrollierten Abgabe des Kupferstecherpheromons. Die Erfindung betrifft auch ein Verfahren zur Bekämpfung und zur Kontrolle des Schwärmverhaltens der Spezies Pityogenes chalcographus, die gemeinhin auch als Kupferstecher oder kleiner sechszähniger Fichtenborkenkäfer bezeichnet wird.

Pheromone haben als Mittel zur Insektenbekämpfung im Waldschutz zunehmende Bedeutung erlangt. Zahlreiche Pheromone, die als Lockstoffe für Schädlinge im Forst, z.B. Borkenkäfer wirken, sind bekannt. Eine Übersicht findet man beispielsweise in J. Vitae, Biologie in unserer Zeit 8, 112 (1978). Eine gängige Methode zum Einsatz von Pheromonen bei der Schädlingsbekämpfung ist der Massenfang in Fallensystemen, wobei die Pheromone als Lockstoffe wirken. Hierfür werden geeignete Wirkstoffdispenser benötigt, die eine langanhaltende, gleichmäßige Abgabe der Wirkstoffe sicherstellen und damit gute Fangergebnisse erzielen.

Der Kupferstecher ist insbesondere in Fichtenbeständen der mit am meisten gefürchtete Schädling. Im Gegensatz zu anderen Borkenkäferarten schädigt der Kupferstecher nicht nur den Stammbereich, wo man einen eventuellen Befall des Baumes durch Einfluglöcher und Bohrmehl nachweisen kann, sondern auch die schwer kontrollierbare Krone. Darüber hinaus tritt er auch im schwer zu kontrollierenden Stangenholz und Kulturen sowie in Kronen von Altbeständen auf - eine Tatsache, die hinsichtlich der Fichte von anderen Käferarten weitgehend unbekannt ist. Aufgrund dieser Eigenarten lassen sich regelmäßig die bei der Bekämpfung anderer Käfer gewonnenen Erkenntnisse nicht auf den Kupferstecher übertragen.

Die Überwachung des Schwärmverhaltens (Monitoring) und der Fang des Kupferstechers als bedeutende Maßnahmen zur Reduzierung des Stehendbefalls, d.h. Befall äußerlich vitaler Bäume, erfolgt in technischen Fallen und/oder mit Fangbäumen bzw. durch Fangholzhaufen, die mit einer naturidentischen Aggregations-Lockstoff- Kombination (Pheromon) bestückt werden. Ein als Lockstoffstoff-Kombination für den Kupferstecher geeignetes Pheromon ist eine Mischung von 2-Ethyl-1,6-dioxaspiro[4,4]nonan mit 2,4-Decadiencarbonsäuremethylester und 2-Methylbut-3-in-1-ol oder 2-Methylbut-3-en-1-ol(im Folgenden auch Kupferstecher-Pheromon). Für eine hohe Attraktivität müssen alle Bestandteile dieser Mischung in ausreichender Menge zugegen sein, da der Kupferstecher auf das Fehlen bereits eines dieser Bestandteile sehr empfindlich reagiert, was hinsichtlich der Fängigkeit der Fallen problematisch ist.

Üblicherweise erfolgt die Abgabe der Pheromone über einen Dispenser in Form eines Folienbeutels aus Polyethylen, in dem sich ein zelluloseartiger, saugfähiger Stoff befindet, der mit dem (aus mindestens drei Wirkstoffen bestehendem) Pheromon getränkt ist. Derartige Dispenser sind unter der Handelsbezeichnung Chalcoprax® DISP von der Fa. BASF Aktiengesellschaft erhältlich. Die Abgabe des Pheromon erfolgt mittels Diffusion durch die Polyethylenfolie.

Diese Dispenser haben den Nachteil, dass die Pheromonabgabe je nach Witterungsbedingungen weitgehend unkontrolliert erfolgt. Die anfänglich hohe Pheromonkonzentration in dem gesättigten Stoff sinkt mit der Zeit immer schneller ab; der Zeitpunkt des Endes der Lockstoff-Abgabe ist nicht konkret zu erfassen. Häufig wird deshalb irrtümlich die Beendigung der Fängigkeit des Kupferstechers in den Fangeinrichtungen gleichgesetzt mit dem Ende des Schwarmfluges. Oft besteht jedoch die tatsächlichen Ursache für ein Nachlassen der Fangleistung in der Erschöpfung des Wirkstoffs oder einer - wie auch immer bedingten - unzureichenden Abgabe des Pheromons durch den Dispenser. Der Anwender ist daher darauf angewiesen, allein aus seiner Erfahrung heraus den Zeitpunkt bestimmen, an dem der herkömmliche Dispenser vor dem möglichen Ende der Lockstoffabgabe ausgetauscht werden muss. Mögliche Anwendungsfehler oder andere Einflüsse (z.B. witterungsbedingt), die vorzeitig zu einer zu geringen bzw. gar keiner Abgabe des Lockstoffes führen, können nur schwer erkannt werden. Ebenso werden noch funktionstüchtige Dispenser rein vorsorglich ersetzt, um sicher zu stellen, dass möglichst viele Kupferstecher vernichtet werden. Um diesen Unsicherheiten in der Wirkstoffabgabe vorzubeugen, werden zwangsläufig im Verlauf der Flugperiode mindestens zwei, zeitweilig auch drei herkömmliche Dispenser benötigt, was für den Anwender einen unnötigen Kostenfaktor darstellt.

Es besteht daher ein Bedarf an Dispensern, welche zur kontrollierten Abgabe der Lockstoffkombination für Kupferstecher über einen längeren Zeitraum geeignet sind.

Aus der EP-A 243 263 ist ein Hohlkammer-Dispenser für Insektenlockstoffe auf Pheromonbasis bekannt, der aus einem Polyolefin oder einem Copolymer aus Olefin und Vinylacetat mit einem Vinylacetatgehalt von weniger als 20 Gew.-% geformt ist. Diese Dispenser weisen zur Regulierung der Permeation der Lockstoffe eine impermeable oder wenig permeable Beschichtung auf. Als Lockstoffe werden 14-Methyloctadec-1-en und E-5-Decenylacetat genannt. Derartige Dispenser haben sich für eine kontrollierte Abgabe des Kupferstecherpheromons als nicht geeignet erwiesen.

Die EP 413 325 A2 beschreibt eine Vorrichtung zur Bekämpfung des Buchdruchers, die eine oder zwei geschlossene, mit Buchdruckerpheromon (Mischung von Ipsdienol, Verbenol und Methylbutenol) gefüllte Kammern umfasst, deren Wandmaterial ein mit einem anorganischen Pigment eingefärbtes Ethylen-Vinylacetat-Copolymerisat mit einem Vinylacetatanteil von 10 bis 15 Gew.-% ist. Derartige Vorrichtungen sind zur Bekämpfung des Kupferstechers ebenfalls nicht geeignet.

Der Erfindung liegt somit die Aufgabe zu Grunde, eine Vorrichtung bereitzustellen, die auch unter ungünstigen Klimaverhältnissen wie wechselnden Temperatur- und Lichtbedingungen oder hohen Temperaturen auch über einen längeren Zeitraum eine zuverlässige Kontrolle des Schwarmflugs des Kupferstechers und damit seine zuverlässige Bekämpfung erlaubt. Das Verfahren sollte insbesondere auch eine wirksame Kontrolle in dieses Schädlings in einem problematisch zu kontrollierenden Umfeld, z.B. in Bereichen mit Windbruch (Käferloch) und/oder in Altbeständen erlauben, da hier gängige Verfahren unbefriedigend sind.

Es wurde nun überraschenderweise gefunden, dass diese Aufgabe durch eine Vorrichtung in Form eines aus einem Kunststoffmaterial geformten Behälters gelöst werden kann, welcher ein oder mehrere geschlossene Kammern aufweist, die jeweils ein flüssiges Pheromon enthalten, das 2-Ethyl-1,6-dioxaspiro[4,4]nonan, 2,4-Decadiencarbonsäuremethylester und wenigstens einen unter 2-Methylbut-3-en-2-ol und 2-Methylbut-3-in-2-ol ausgewählten Alkohol umfasst, wobei wenigstens 50 % der Fläche der die Kammern bildenden Wände eine Wandstärke im Bereich von 0,1 bis 1 mm aufweisen und das die Kammer bildende Kunststoffmaterial zumindest in diesen Flächen ein unbeschichtetes ungefärbtes Vinylacetat-Ethylen-Copolymer mit einem Vinylacetat-Gehalt im Bereich von 10 bis 17 Gew.-% ist.

Demnach betrifft die vorliegende Erfindung eine derartige Vorrichtung. Auf Grund der Abgabecharakteristik des Wirkstoffs ist diese Vorrichtung im besonderen Maße zur Bekämpfung und dem Monitoring von Käfern der Spezies Pityogenes chalcographus geeignet. Gegenstand der vorliegenden Erfindung ist daher auch die Verwendung derartiger Vorrichtungen bei der Bekämpfung und dem Monitoring des Kupferstechers, sowie ein Verfahren zur Bekämpfung des Kupferstechers, bei dem man eine oder mehrere erfindungsgemäße Vorrichtungen in Verbindung gemeinsam mit Fangvorrichtungen einsetzt.

Ein wesentlicher Aspekt der vorliegenden Erfindung ist die Art des Wandmaterials der Kammern, denn die Wände, welche die Kammern umgeben, stellen die Barriere dar, durch welche die Lockstoffkombination diffundiert und dann in kontrollierter Weise an die Umgebung abgegeben wird. Man nimmt an, dass dieses spezielle Wandmaterial dieses Pheromon wie ein Schwamm aufnimmt und dann kontrolliert abgibt, so dass dieses spezielle Wandmaterial wie ein Puffer wirkt, welcher witterungsbedingte Schwankungen der Abgaberate ausgleicht. Erfindungsgemäß werden wenigstens 50 %, vorzugsweise wenigstens 70%, insbesondere wenigstens 90 % und insbesondere die gesamte Wandfläche, welche die Kammern der Vorrichtung umgibt, von dem Ethylen-Vinylacetat-Copolymer gebildet. Dieses weist vorzugsweise einen Vinylacetat-Gehalt im Bereich von 12 bis 15 Gew.-% auf, wobei zumindest diese Wandflächenbereiche unbeschichtet sind. Außerhalb dieser Grenzen ist eine gleichmäßige Abgabe der Wirkstoffbestandteile der in den Kammern enthaltenen Wirkstofflösung nicht mehr gewährleistet.

Das Wandmaterial ist ungefärbt. Dies bedeutet, dass das die Wände der Kammer bildende Vinylacetat-Ethylen-Copolymer keine farbgebenden Bestandteile wie anorganische oder organische Pigmente oder sonstige Farbstoffe enthält. Vorrichtungen, in denen die Wände der Kammern aus einem ungefärbten Vinylacetat-Ethylen-Copolymeren gebildet werden, gewährleisten in besonderem Maße unter extremen Witterungsbedingungen, insbesondere bei längeren Hitzeperioden, noch eine zuverlässige Fängigkeit.

In einer anderen Ausführungsform wird das Wandmaterial der Kammern von einem gefärbten Vinylacetat-Ethylen-Copolymeren gebildet, das bis zu 50 Gew.-%, üblicherweise 1 bis 30 Gew.-% Farbmittel, z.B. Pigment, insbesondere rote und/oder braune Pigmente enthält.

Das als Wandmaterial eingesetzte Vinylacetat-Ethylen-Copolymer kann geringe Mengen an für derartige Polymere übliche Stabilisatoren, z.B. Antioxidantien enthalten, die ein Altern des Kunststoffmaterials verhindern oder verringern. Derartige Stabilistatoren können in Mengen von bis zu 0,1 Gew.-% in dem Polymer enthalten sein. Daneben kann das Polymer auch übliche Mengen an Verarbeitungsmitteln enthalten, wie Antiblockingmittel und Gleitmittel, z.B. Erucasäureamid oder Ölsäureamid. Diese wirken sich nicht nachteilig auf die Eigenschaften der Vorrichtung aus.

Weiterhin hat es sich als vorteilhaft erwiesen, wenn das Vinylacetat-Ethylen-Copolymer einen Schmelzflussindex im Bereich von 1,8 bis 3,2 g/10 min und insbesondere im Bereich von 2,2 bis 2,8 g/10 min aufweist, bestimmt nach ASTM D 1238 bei 190 °C und einer Belastung von 2,16 kg.

Derartige Vinylacetat-Ethylen-Copolymere sind aus dem Stand der Technik bekannt und kommerziell verfügbar, z.B. unter den Handelsbezeichnungen Greenflex ML, insbesondere Greenflex® ML 40 der Fa. Polimeri SA, Italien.

Die erfindungsgemäßen Vorrichtungen können neben dem Vinylacetat-Ethylen-Copolymeren, das zumindest den Überwiegenden Teil der Kammerwandung bildet, auch weitere Materialien umfassen, z. B. Materialien zum mechanischen Verbinden mehrerer Kammern oder zum Stabilisieren der Vorrichtung gegenüber mechanischen Beschädigungen oder zum Befestigen der Vorrichtung an Bäumen oder in Fallen. Vorzugsweise ist jedoch die erfindungsgemäße Vorrichtung ausschließlich aus dem Vinylacetat-Ethylen-Copolymeren aufgebaut.

Die erfindungsgemäße Vorrichtung enthält in den Kammern das flüssige Kupferstecherpheromon. In der Regel beträgt die Gesamtmenge an Lockstoffkombination 2 bis 10 ml pro Vorrichtung und insbesondere 1 bis 5 ml und speziell 1,5 bis 2,5 ml je Kammer. Bevorzugt ist eine Lockstoffkombination, die 2-Ethyl-1,6-dioxaspiro[4,4]nonan in einer Konzentration von 2 bis 10 Gew.-% und insbesondere 4 bis 8 Gew.-%, bezogen auf das Gesamtgewicht der Lockstoffkombination enthält. Bevorzugt liegt die Konzentration des Decadienylesters in der Lockstoffkombination im Bereich von 0,5 bis 5 Gew.-%, insbesondere im Bereich von 1 bis 2 Gew.-%. Der Anteil an 2-Methylbut-3-in-2-ol beträgt in der Regel wenigstens 50 Gew.-% und liegt insbesondere im Bereich von 80 bis 97 Gew.-%. Insbesondere enthält die Lockstoffkombination keine weiteren Bestandteile, abgesehen von geringen Mengen an herstellungsbedingten Verunreinigungen und gegebenenfalls vorhandenen Stabilisatoren.

Im Unterschied zu den Folienbeuteln des Stands der Technik handelt es sich bei den erfindungsgemäßen Vorrichtungen um geformte, d. h. dreidimensionale Gegenstände, die wenigstens 2, z. B. 2, 3 oder 4 Kammern zur Aufnahme des Kupferstecherpheromons aufweisen. Um eine gleichmäßige Abgabe des Pheromons zu gewährleisten, weisen mindestens 50 %, insbesondere mindestens 70 % der die Kammern bildenden Wandflächen eine Wandstärke im Bereich von vorzugsweise 0,2 bis 0,6 mm und insbesondere im Bereich von 0,25 bis 0,5 mm auf. Erfindungsgemäß werden zumindest diese Flächen von dem Ethylen-Vinylacetat-Copolymeren gebildet und weisen keine Beschichtung auf.

Die Geometrie der Kammern kann sphärisch, ellipsoid, polyedrisch, zylindrisch oder unregelmäßig geformt sein. Vorzugsweise weist der überwiegende Teil der Kammer eine röhrenförmige Geometrie auf, wobei die Querschnittsfläche der Röhre kreisförmig, sternförmig, rechteckig, elliptisch, polygonal oder unregelmäßig geformt sein kann. Häufig weist die Querschnittsfläche eine kreisförmige oder ellipsoide Geometrie oder eine rechteckige Geometrie mit abgerundeten Kanten auf. Das Innenvolumen der jeweiligen Kammern liegt üblicherweise im Bereich von 1 bis 5 cm³.

Ferner hat es sich als günstig erwiesen, wenn die Fläche der die jeweilige Kammer bildenden Wände und das Innenvolumen der jeweiligen Kammer ein Verhältnis im Bereich von 1 bis 10 cm⁻¹ und insbesondere im Bereich von 2 bis 6 cm⁻¹ aufweisen. Vorzugsweise weisen röhrenförmige Kammern einen Innendurchmesser im Bereich von 5 bis 20 mm bzw. eine Querschnittfläche im Bereich von 20. bis 200 mm² und eine Länge im Bereich von 15 bis 40 mm auf. Die Enden dieser röhrenförmigen Kammern können in beliebiger Weise verschlossen sein, beispielsweise durch konkave oder plane Flächen.

In einer bevorzugten Ausführungsform weist die erfindungsgemäße Vorrichtung zwei Kammern auf. Sofern die erfindungsgemäße Vorrichtung zwei oder mehr Kammern aufweist, sind diese voneinander getrennt, d. h. sie weisen keine Verbindungen auf, die für Flüssigkeiten durchgängig sind.

Neben der (den) Kammer(n) kann die erfindungsgemäße Vorrichtung auch Mittel zum Befestigen der Vorrichtung in Köderfallen, z. B. Aussparungen zum Durchführen von Befestigungsmitteln wie Draht und dergleichen aufweisen.

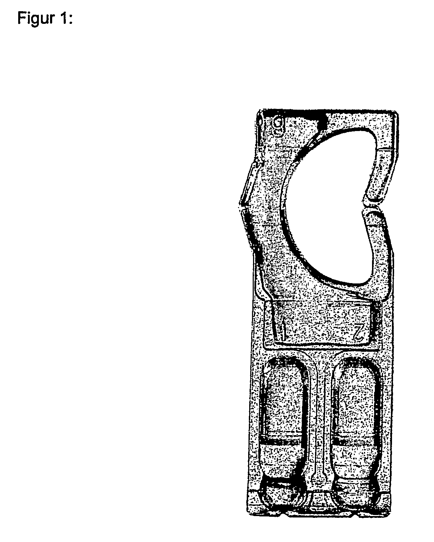

Ein Beispiel für eine erfindungsgemäße mit Pheromon gefüllte Vorrichtung aus ungefärbtem Vinylacetat-Ethylen-Copolymeren ist in der Figur 1 gezeigt.

Die erfindungsgemäßen Vorrichtungen können in Analogie zu mit Wirkstoff gefüllten Ampullen des Stands der Technik hergestellt werden, z. B. durch Blasformen, Doppelstreckziehen oder insbesondere durch Thermoformen, wobei in der Regel in einem Arbeitsgang auch ein Befüllen der Kammern erfolgt.

Die erfindungsgemäßen Vorrichtungen sind mit einer Reihe von Vorteilen verbunden:

Im Unterschied zu den herkömmlichen Dispensern gewährleisten die erfindungsgemäßen Vorrichtungen eine kontinuierliche Abgabe des Pheromons in einer wirksamen Menge. Auch Konzentrationsschwankungen in den freigesetzten Pheromonbestandteilen treten im Gegensatz zu den konventionellen Dispensern nicht oder nicht in einem Maße auf, das die Fängigkeit nachteilig beinflussen würde. Im Gegensatz zu den herkömmlichen Folienbeutel-Dispensern, bei denen ein empirischer Wechsel nach 8 bis 10 Wochen erforderlich ist, gewährleistet die erfindungsgemäße Vorrichtung auch noch nach 14 Wochen die Abgabe der für eine exakte Fängigkeit erforderlichen Pheromonmenge und -zusammensetzung. Mit der erfindungsgemäßen Vorrichtung ist es darüber hinaus erstmals möglich, das Ende des Schwarmfluges zuverlässig vom Leerstand einer mit der erfindungsgemäßen Vorrichtung bestückten Falle abzuleiten. Überdies gewährleisten die erfindungsgemäßen Vorrichtungen auch eine zuverlässige Kontrolle des Schwarmfluges an problematischen Standorten wie Altbeständen.

Ein weiterer Vorteil ist die verbesserte Kontrollmöglichkeit des Hohlkammerdispensers. Da die Vorrichtung aufgrund des gewählten Wandmaterials und der Wandstärke durchsichtig ist, kann der Füllstand stets exakt abgelesen werden, so dass der Zeitpunkt genau bestimmt werden kann, an dem der Austausch der Vorrichtung notwendig wird. Während man - unabhängig vom möglicherweise noch vorhandenen Rest an Pheromon - den herkömmlichen Dispenser nach der Beendigung des Schwarmfluges wegen zu geringer Zuverlässigkeit in der Fängigkeit entsorgte, kann die erfindungsgemäße Vorrichtung exakt auf Restmengen kontrolliert, ggf. bei sorgfältiger und kühler Lagerung für das nächste Jahr aufbewahrt und dann wieder verwendet werden.

Die Erfindung verbessert somit grundlegend die Sicherheit bei der Überwachung (Monitoring) sowie die Fängigkeit von Kupferstechern und erlaubt somit zuverlässig eine Reduzierung des Stehendbefalls. Darüber hinaus trägt sie durch einfache Herstellung, Kontrolle noch vorhandener Restmengen und Wiederverwendbarkeit nach Einlagerung nicht nur zur Kostenersparnis, sondern auch zu reduzierten Mengen an Restmüll bei.

Die erfindungsgemäßen Vorrichtungen können somit in üblicher Weise zur Bekämpfung von Käfern der Spezies Pityogenes chalcographus eingesetzt werden. In der Regel wird man sie zusammen mit Käferfallen, mit Fangholzhaufen, Fangbäumen, Fangreisighaufen oder Fangpfählen, die gegebenenfalls mit einem geeigneten Insektizid, z.B. α-Cypermethrin, behandelt sind, einsetzen. Verfahren hierzu sind dem Fachmann bekannt, z. B. aus Forsttechnische Informationen, 1996 (8), S. 77 - 80 sowie aus den Produktangaben der Hersteller zu Chalcoprax®, z. B. aus den Produktinformationen der BASF Aktiengesellschaft.

Häufig wird man die erfindungsgemäßen Vorrichtungen mit Fangvorrichtungen wie Schlitzfallen der Fa. Theysohn, die z.B. als Drei-Fallen-Sterne oder als einzelne Fallen angeordnet sein können, kombinieren. Auch die gemeinsame Anwendung der mit der erfindungsgemäßen Vorrichtung kombinierten Fangvorrichtung mit anderen Fangvorrichtungen wie Fangholzhaufen, Fangpfählen, Fangreisighaufen oder Fangbäumensind zur Bekämpfung des Kupferstechers geeignet.

Die erfindungsgemäßen Vorrichtungen können auch zum Monitoring eingesetzt werden. Hierzu wird man sie in der Regel in Einzelfallen platzieren, z. B. an gefährdeten Stellen von Fichtendickungen, Stangenhölzern, aber auch älteren Beständen.

Zur Reduktion von Stehendbefall wird man ein oder mehrere erfindungsgemäße Vorrichtungen zusammen mit Fallen oder Fangholzhaufen, Fangpfählen, Fangreisighaufen oder Fangpoltern, die mit einem geeigneten Insektizid, z.B. α-Cypermethrin, behandelt sind, an Standorten mit Vorbefall im stehenden bzw. liegenden Holz nach dem Ausräumen des Vorbefalls einsetzen.

Die folgenden Beispiele sollen die Erfindung verdeutlichen, ohne sie jedoch einzuschränken.

### Beispiel 1:

Vorrichtung mit zwei Kammern, wie in Abbildung 1 dargestellt, die aus einem ungefärbten Vinylacetat-Ethylen-Copolymeren mit den folgenden Eigenschaften besteht.
- Vinylacetatgehalt: 14 Gew.-%;
- Schmelzflussindex: 2,50 g/10' (bei 190°C/ 2,16 kg nach ASTM-D 1238)
- Biegemodul: 60 mPa (ASTM D790)

Die Länge der Kammern beträgt jeweils ca. 30 mm, der mittlere Durchmesser ca. 1,2 mm, das Leervolumen pro Kammer liegt bei etwa 2,8 ml. Die Wanddicke der Kammern in der zur Aufhängung orientierten Hälfte liegt bei 391 ± 30 µm.

Die Kammern waren mit insgesamt 2000 mg (Füllgewicht) eines Gemischs aus 6-7 Gew.-% 2-Ethyl-1,6-dioxaspiro[4,4]nonan, 1-2 Gew.-% 2,4-Decadiencarbonsäuremethylester und 91-93 Gew.-% 2-Methylbut-3-in-2-ol gefüllt.

### Beispiel 2:

Vorrichtung mit zwei Kammern analog Beispiel 1, wobei das Wandmaterial aus einem braun-gefärbten Vinylacetat-Ethylen-Copolymeren mit den folgenden Eigenschaften besteht.
- Vinylacetatgehalt: 14 Gew.-%;
- Schmelzflussindex: 2,50 g/10' (bei 190°C/ 2,16 kg nach ASTM-D 1238)
- Biegemodul: 60 mPa (ASTM D790)

### Vergleichsbeispiel 1:

Vorrichtung mit zwei Kammern analog Beispiel 1, wobei das Wandmaterial aus einem mit braun gefärbten LD-Polyethylen (LUPOLEN 3020 D, BASELL) besteht.

### Vergleichsbeispiel 2:

Vorrichtung mit zwei Kammern analog Beispiel 1, wobei das Wandmaterial aus einem mit Titandioxid weiß gefärbten LD-Polyethylen (LUPOLEN 2920 K, BASELL) besteht.

### Vergleichsbeispiel 3:

Vorrichtung mit zwei Kammern analog Beispiel 1, wobei das Wandmaterial aus einem mit Titandioxid weiß gefärbten Polyethylen (LUPOLEN 1840 H, BASELL) besteht.

### Vergleichsbeispiel 4:

Vorrichtung mit zwei Kammern analog Beispiel 1, wobei das Wandmaterial aus einem mit Titandioxid ungefärbten Polyethylen (LUPOLEN 2420 H, BASELL) besteht.

### Vergleichsbeispiel 5:

Handelsüblicher mit 1,8 g des Pheromons aus Beispiel 1 gefüllter FolienbeutelDispenser Chalcoprax® Disp der BASF Aktiengesellschaft.

### Untersuchung des Abdampfverhaltens:

Die mit dem Pheromon befüllten Vorrichtungen wurden über einen Zeitraum von etwa 3,5 Monaten (30. April 2003 bis 10. August 2003) unter Freilandbedingungen in Abständen von 8 bis 18 Tagen auf ihren Gewichtsverlust hin untersucht. Hierzu wurden die Vorrichtungen jeweils in Schlitzfallen der Fa. Theysohn eingehängt. Standort war Gerwisch/Magdeburg. Die Fallen lagen vormittags im Schatten und ab Mittag in der Sonne. Die in Tabelle 1 angegebenen Ergebnisse sind die Mittelwerte für jeweils 10 Vorrichtungen.

**Tabelle 1:**

| | Datum | 30.4 | 10.5. | 18.5 | 5.6. | 14.6 | 25.6 | 3.7. | 10.7. | 19.7. | 27.7. | 3.8. | 10.8. |
|---|---|---|---|---|---|---|---|---|---|---|---|---|---|
| Beispiel | | | | | | | | | | | | | |
| 1 | [mg]¹⁾ | 0 | 253 | 619 | 782 | 916 | 1095 | 1238 | 1449 | 1596 | 1703 | 1730 | 1733 |
| | [%]²⁾ | 100 | 87,3 | 69,1 | 60,9 | 54,2 | 45,3 | 38,1 | 27,6 | 20,2 | 14,9 | 13,5 | 13,4 |
| 2 | [mg]¹⁾ | 0 | 376 | 396 | 703 | 933 | 1138 | 1277 | 1390 | 1486 | 1610 | 1754 | 1822 |
| | [%]²⁾ | 100 | 81,2 | 80,2 | 64,9 | 53,3 | 43,1 | 36,1 | 30,5 | 25,7 | 19,5 | 12,3 | 8,9 |
| V1 | [mg]¹⁾ | 0 | 68 | 71 | 220 | 220 | 226 | 229 | Versuch abgebrochen | | | | |
| | [%]²⁾ | 100 | 96,6 | 96,5 | 89,0 | 89,0 | 88,7 | 88,6 | | | | | |
| V2 | [mg]¹⁾ | 0 | 40 | 78 | 153 | 176 | 226 | 301 | Versuch abgebrochen | | | | |
| | [%]²⁾ | 100 | 98 | 96,1 | 92,4 | 91,2 | 88,7 | 85,0 | | | | | |
| V3 | [mg]¹⁾ | 0 | 2 | 2 | 6 | 8 | 10 | 14 | Versuch abgebrochen | | | | |
| | [%]²⁾ | 100 | 99,9 | 99,9 | 99,7 | 99,6 | 99,5 | 99,3 | | | | | |
| V4 | [mg]¹⁾ | 0 | 2 | 8 | 12 | 28 | 37 | 43 | Versuch abgebrochen | | | | |
| | [%]²⁾ | 100 | 99,9 | 99,6 | 99,4 | 98,6 | 98,2 | 97,9 | | | | | |

| | | | | | | | | | | | | | |
|---|---|---|---|---|---|---|---|---|---|---|---|---|---|
| 1) Gewichtsverlust in mg 2) Gewicht in [%] bezogen auf das Füllgewicht von 2000 mg Die Daten in Tabelle 1 zeigen, dass die üblicherweise für Pheromon-Abgabevorrichtungen verwendeten Polyethylenkunststoffe eine völlig unzureichende Abgabe des Kupferstecher-Pheromons gewährleisten, wohingegen erfindungsgemäße Kunststoffmaterialien eine dem Flug des Kupferstechers angepasste Abgabe über einen Zeitraum von 3,5 Monaten gewährleisten. | | | | | | | | | | | | | |

Untersuchung der Fängigkeit für Kupferstecher in einer Dickung von Fichten:

Die mit dem Pheromon befüllten Vorrichtungen wurden am 15. April 2003 in Schlitzfallen der Fa. Theysohn eingehängt. Standort war eine Dickung von Fichten (15 Jahre) in Bad Berka, Revier Blankenhain, 400 m Höhenlage. Es wurden je 3 Fallen pro Vorrichtungstyp bestückt. Ermittelt wurde jeweils die Zahl der zu einem bestimmten Zeitpunkt in den 3 Fallen gefangenen Kupferstecher sowie die Gesamtzahl der über den gesamten Untersuchungszeitraum gefangenen Kupferstecher. Die Werte sind in Tabelle 3 angegeben. Alle Fallen wurden am 29. Juli 2003 neu bestückt und entsprechend die Fängigkeit ermittelt. Die Werte sind in Tabelle 3 angegeben.

**Tabelle 2:**

| | 24.4. | 29.4. | 6.5. | 13.5. | 20.5. | 27.5. | 3.6. | 10.6. |
|---|---|---|---|---|---|---|---|---|
| V5 | 77 | 336 | 1528 | 221 | 37 | 61 | 2893 | 6311 |
| 1 | 49 | 346 | 1391 | 417 | 34 | 672 | 3606 | 6270 |
| 2 | 43 | 239 | 2373 | 163 | 7 | 538 | 2539 | 5586 |
| | | | | | | | | |
| | 17.6. | 24.6. | 1.7. | 8.7 | 15.7. | 22.7. | 29.7. | Gesamt |
| V5 | 1488 | 188 | 198 | 51 | 54 | 56 | 24 | 13523 |
| 1 | 4123 | 2385 | 1778 | 421 | 1464 | 1384 | 3078 | 27519 |
| 2 | 4389 | 4450 | 715 | 163 | 1775 | 2612 | 2717 | 28309 |

**Tabelle 3:**

| | 6.8. | 12.8 | 19.8. | 2.9. | 9.9 | 16.9. | 25.9. | Gesamt |
|---|---|---|---|---|---|---|---|---|
| V5 | 3233 | 2640 | 819 | 0 | 0 | 70 | 11 | 7792 |
| 1 | 3780 | 1896 | 967 | 6 | 0 | 90 | 21 | 8231 |
| 2 | 1810 | 2227 | 893 | 6 | 0 | 77 | 18 | 5597 |

Die Daten in Tabelle 2 zeigen, dass die erfindungsgemäßen Vorrichtungen einem Konventionellen Dispenser dahingehend überlegen sind, dass sie auch über einen längeren Zeitraum von 3 Monaten eine hohe Fängigkeit gewährleisten, wohingegen der konventionelle Folienbeuteldispenser nach etwa 2 Monaten kaum Wirkunkg zeigt.

Die Daten in Tabelle 3 zeigen, daß erfindungsgemäße Vorrichtungen aus ungefärbtem Folienmaterial bei den hohen Temperaturen im Meßzeitraum eine bessere Fängigkeit gewährleisten als erfindungsgemäße Vorrichtungen aus gefärbtem Folienmaterial.

Untersuchung der Fängigkeit für Kupferstecher in einem Altbestand von Fichten:

Die mit dem Pheromon befüllten Vorrichtungen wurden am 20. April 2003 in Schlitzfallen der Fa. Theysohn eingehängt. Standort war ein Altbestand von Fichten (Alter 80-90 Jahre) im Revier Rübeland/Harz, 400 m Höhenlage. Es wurden pro Vorrichtungstyp je 3 Fallen bestückt. Ermittelt wurde jeweils die Zahl der zu einem bestimmten Zeitpunkt in den 3 Fallen gefangenen Kupferstecher sowie die Gesamtzahl der über den gesamten Untersuchungszeitraum gefangenen Kupferstecher. Die Werte sind in Tabelle 4 angegeben.

**Tabelle 4:**

| Bsp. | 30.4. | 9.5. | 16.5. | 25.5. | 3.6. | 10.6. |
|---|---|---|---|---|---|---|
| V5 | 5 | 616 | 2032 | 338 | 379 | 16335 |
| 1 | 90 | 818 | 1172 | 529 | 636 | 14610 |
| | | | | | | |
| | 18.6. | 28.6. | 3.7. | 18.7. | 26.7. | Gesamt |
| V5 | 11160 | 4639 | 2398 | 559 | 28 | 38489 |
| 1 | 8280 | 11339 | 1366 | 728 | 243 | 39811 |

Eine vergleichbare Untersuchung der Fängigkeit für Kupferstecher, die im Zeitraum vom 28. April 2002 bis 6. Juli 2002 im Revier Rübeland/Harz bei 480 m Höhelage in einem Altbestand von Fichten (Alter 80-90 Jahre) durchgeführt wurde, zeigte dass die Vorrichtungen der Vergleichsbeispiele 1, 3 und 4 eine Gesamtfängigkeit von weniger 10 % der Fängigkeit eines konventionellen Dispensers gemäß Vergleichsbeispiel 5 aufweisen.

## Patentansprüche

1. Vorrichtung in Form eines aus einem Kunststoffmaterial geformten Behälters, umfassend wenigstens zwei geschlossene Kammern, die jeweils ein flüssiges Pheromon enthalten, das 2-Ethyl-1,6-dioxaspiro[4,4]nonan, 2,4-Decadiencarbonsäuremethylester und wenigstens einen unter 2-Methylbut-3-en-2-ol und 2-Methylbut-3-in-2-ol ausgewählten Alkohol umfasst, wobei wenigstens 50 % der Fläche der die Kammern bildenden Wände eine Wandstärke im Bereich von 0,1 bis 1 mm aufweisen und das die Kammer bildende Kunststoffmaterial zumindest in diesen Flächen ein unbeschichtetes, ungefärbtes Vinylacetat-Ethylen-Copolymer mit einem Vinylacetat-Gehalt im Bereich von 10 bis 17 Gew.-% ist.

2. Vorrichtung nach Anspruch 1, wobei das Vinylacetat-Ethylen-Copolymer einen Schmelzflussindex im Bereich von 1,8 bis 3,2 g/10 min aufweist, bestimmt nach ASTM D 1238 bei 190 °C und 2,16 kg.

3. Vorrichtung nach Anspruch 1 oder 2, wobei das Verhältnis von Fläche der die Kammern bildenden Wände zu dem Innenvolumen der Kammer im Bereich von 1 bis 10 cm⁻¹ liegt.

4. Vorrichtung nach einem der vorhergehenden Ansprüche, worin die Kammer(n) eine röhrenförmige Geometrie aufweist/aufweisen, mit einem Innendurchmesser im Bereich von 5 bis 20 mm und einer Länge im Bereich von 20 bis 40 mm.

5. Vorrichtung nach einem der vorhergehenden Ansprüche mit zwei voneinander getrennten Kammern.

6. Vorrichtung nach einem der vorhergehenden Ansprüche, die ausschließlich aus den im Wesentlichen ungefärbten Vinylacetat-Ethylen-Copolymeren aufgebaut ist.

7. Vorrichtung nach einem der vorhergehenden Ansprüche, wobei das Pheromon, bezogen auf sein Gesamtgewicht,
- 2 bis 10 Gew.-% 2-Ethyl-1,6-dioxaspiro[4,4]nonan;
- 0,5 bis 5 Gew.-% 2,4-Decadiencarbonsäuremethylester und
- 90 bis 97,5 Gew.-% 2-Methylbut-3-in-2-ol und/oder 2-Methylbut-3-en-2-ol enthält.

8. Vorrichtung nach einem der vorhergehenden Ansprüche, enthaltend das Pheromon in einer Menge von 1 bis 5 ml, je Kammer.

9. Verfahren zur Bekämpfung des Kupferstechers (Pityogenes chalcographus), **dadurch gekennzeichnet, dass** man eine oder mehrere Vorrichtungen nach einem der vorhergehenden Ansprüche in Verbindung mit Fangvorrichtungen verwendet.

10. Verwendung von Vorrichtungen nach einem der Ansprüche 1 bis 8 zur Kontrolle des Schwarmflugs des Kupferstechers.

## Claims

1. A device in the form of a container made of a plastic material, which container comprises at least two sealed chambers, each of which comprise a liquid pheromone comprising 2-ethyl-1,6-dioxaspiro[4,4]nonane, methyl 2,4-decadienecarboxylate and at least one alcohol selected among 2-methylbut-3-en-2-ol and 2-methylbut-3-yn-2-ol, where at least 50% of the area of the walls forming the chambers have a wall thickness in the range of from 0.1 to 1 mm and the plastic material which forms the chamber is at least in those areas an uncoated, uncolored vinyl acetate/ethylene copolymer with a vinyl acetate content in the range of from 10 to 17% by weight.

2. The device according to claim 1, wherein the vinyl acetate/ethylene copolymer has a melt flow index in the range of from 1.8 to 3.2 g/10 min, as determined by ASTM D 1238 at 190°C and 2.16 kg.

3. The device according to claim 1 or 2, wherein the ratio of the area of the walls forming the chambers to the internal volume of the chamber is in the range of from 1 to 10 cm⁻¹.

4. The device according to any of the preceding claims, wherein the chamber(s) has/have a tubular geometry with an internal diameter in the range of from 5 to 20 mm and a length in the range of from 20 to 40 mm.

5. The device according to any of the preceding claims with two separate chambers.

6. The device according to any of the preceding claims which is made exclusively of the essentially uncolored vinyl acetate/ethylene copolymers.

7. The device according to any of the preceding claims, wherein the pheromone comprises
- 2 to 10% by weight of 2-ethyl-1,6-dioxaspiro[4,4]nonane;
- 0.5 to 5% by weight of methyl 2,4-decadienecarboxylate and
- 90 to 97.5% by weight of 2-methylbut-3-yn-2-ol and/or 2-methylbut-3-en-2-ol
based on its total weight.

8. The device according to any of the preceding claims, comprising the pheromone in an amount of from 1 to 5 ml per chamber.

9. A method for combating the six-dentated bark beetle (Pityogenes chalcographus), which comprises using one or more devices according to any of the preceding claims in conjunction with trapping devices.

10. The use of devices according to any of claims 1 to 8 for monitoring the swarming of the six-dentated bark beetle.

## Revendications

1. Dispositif sous forme d'un récipient moulé à partir d'un matériau en matière plastique, comprenant au moins deux chambres fermées qui contiennent chacune une phéromone liquide comprenant le 2-éthyl-1,6-dioxaspiro[4,4]nonane, le 2,4-décadiènecarboxylate de méthyle et au moins un alcool choisi parmi le 2-méthylbut-3-én-2-ol et le 2-méthylbut-3-yn-2-ol, au moins 50 % de la surface des parois formant la chambre présentant une épaisseur de paroi dans la plage de 0,1 à 1 mm et le matériau en matière plastique constituant la chambre étant au moins dans ces zones un copolymère acétate de vinyle/éthylène non coloré, non revêtu, ayant une teneur en acétate de vinyle dans la plage de 10 à 17 % en poids.

2. Dispositif selon la revendication 1, dans lequel le copolymère acétate de vinyle/éthylène présente un indice de fluidité à chaud dans la plage de 1,8 à 3,2 g/10 min, déterminé selon ASTM D 1238 à 190 °C et sous 2,16 kg.

3. Dispositif selon la revendication 1 ou 2, dans lequel le rapport de la surface des parois formant les chambres au volume interne des chambres se situe dans la plage allant de 1 à 10 cm⁻¹.

4. Dispositif selon l'une quelconque des revendications précédentes, dans lequel la/les chambre (s) présente (nt) une géométrie tubulaire, avec un diamètre interne dans la plage de 5 à 20 mm et une longueur dans la plage de 20 à 40 mm.

5. Dispositif selon l'une quelconque des revendications précédentes, comportant deux chambres séparées l'une de l'autre.

6. Dispositif selon l'une quelconque des revendications précédentes, qui est exclusivement constitué de copolymères acétate de vinyle/éthylène non colorés.

7. Dispositif selon l'une quelconque des revendications précédentes, dans lequel la phéromone contient, par rapport à son poids total,
- 2 à 10 % en poids de 2-éthyl-1,6-dioxaspiro-[4,4]nonane,
- 0,5 à 5 % en poids de 2,4-décadiènecarboxylate de méthyle et
- 90 à 97,5 % en poids de 2-méthylbut-3-én-2-ol et/ou de 2-méthylbut-3-yn-2-ol.

8. Dispositif selon l'une quelconque des revendications précédentes, contenant la phéromone en une quantité de 1 à 5 ml par chambre.

9. Procédé pour la lutte contre le chalcographe (*Pityogenes chalcographus*), **caractérisé en ce qu'**on utilise un ou plusieurs dispositifs selon l'une quelconque des revendications précédentes, conjointement avec des dispositifs de capture.

10. Utilisation des dispositifs selon l'une quelconque des revendications 1 à 8, pour la lutte contre la propagation du chalcographe.
